# EUROPEAN PATENT SPECIFICATION

(11) **EP 1 756 932 B1**
(45) Date of publication and mention of the grant of the patent: **29.10.2008**
(21) Application number: 04736209.0
(22) Date of filing: 07.06.2004
(51) Int. Cl.: H02M 1/00

(54) **METHOD AND CIRCUIT ARRANGEMENT FOR OPTIMISING MAXIMUM CURRENT LIMITATION IN THE PRIMARY SWITCH OF A SWITCHED-MODE POWER SUPPLY, AND A POWER SUPPLY**
VERFAHREN UND SCHALTUNGSANORDNUNG ZUR OPTIMIERUNG DER MAXIMALSTROMBEGRENZUNG IN DEM HAUPTSCHALTER EINES SCHALTNETZTEILS UND NETZTEIL
PROCEDE ET DISPOSITION DE CIRCUIT PERMETTANT D'OPTIMISER LA LIMITATION DE COURANT MAXIMALE DANS LE COMMUTATEUR PRIMAIRE D'UNE ALIMENTATION EN MODE COMMUTE ET BLOC D'ALIMENTATION ASSOCIE

(43) Date of publication of application: 28.02.2007
(73) Proprietor: Salcomp Oyj, 24101 Salo (FI)
(72) Inventor: MINKKINEN, Jarmo, FI-25360 Pertteli (FI)
(74) Representative: Brax, Matti Juhani
(86) International application number: PCT/FI2004/000348
(87) International publication number: WO 2005/122372

(56) References cited:
- US-A- 4 278 930
- US-A1- 2002 080 626
- US-A1- 2003 142 521
- US-B1- 6 333 624

## Description

The invention concerns generally the circuit topology of switched-mode power supplies. Especially the invention concerns a circuit arrangement that is used to limit the maximum current that may flow through the primary switch, which is the switching component that chops the current that flows through the primary coil of the transformer in the switched-mode power supply.

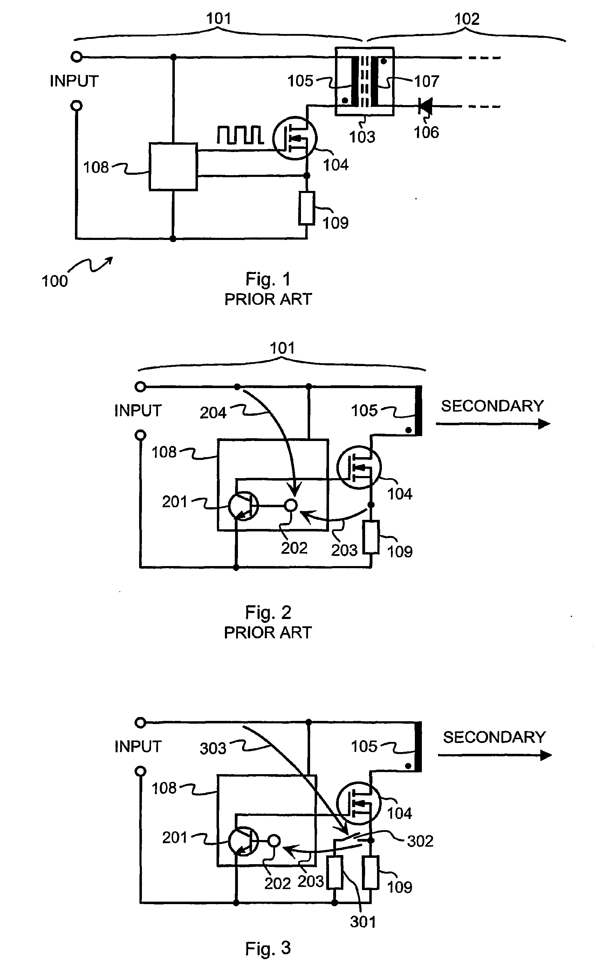

Fig. 1 is a schematic illustration of certain known features that are usually found on the primary side of a switched-mode power supply. In fig. 1, a switched-mode power supply 100 comprises a primary side 101 and a secondary side 102 separated from each other by a transformer 103. A switch 104 on the primary side repeatedly switches the current flowing through a primary coil 105, which causes energy to be stored into the magnetic field of the transformer 103. A diode 106 on the secondary side only allows current to flow in one direction through a secondary coil 107. The switching pulses for the primary switch 104 come from a pulse forming circuit 108, which may receive some kind of control information that describes the momentary need of energy that should be conveyed over the transformer 103 from the primary side 101 to the secondary side.

Fig. 1 illustrates specifically one control mechanism that is affecting the way in which pulses are formed in the pulse forming circuit 108. Coupled in series with the switch 104 there is a current sensing resistor 109. When at the beginning of a switching pulse the switch 104 is closed, a primary current starts to flow through the series coupling of the primary coil 105, switch 104 and current sensing resistor 109. The larger the primary current value, the larger a voltage drop can be observed over the current sensing resistor 109. The pulse forming circuit 108 comprises a trigger mechanism (not separately shown in fig. 1) that is adapted to react when said voltage drop exceeds a threshold value, by terminating the ongoing switching pulse. This functionality is known as maximum primary current limiting, or maximum current limitation in the primary switch. An exemplary prior art publication utilising such a circuit arrangement is DE 101 43 016 A1.

A common objective of the designers of switched-mode power supplies, as well as devices such as battery chargers that are essentially built around a switched-mode power supply, is to make the device accept a wide range of input voltages. A simple consequence of Ohm's law is that with lower input voltages there must be higher currents to deliver.a constant amount of electric energy, compared to higher input voltages. A problem arises, how should one take into account the fact that the maximum primary current limiting functionality as such always reacts to the same threshold value of the primary current.

A known solution is to select the value of the current sensing resistor 109 small enough so that the maximum primary current limiting functionality actually only functions perfectly with low input voltages, and to accept the fact that with higher input voltages it would allow excessively large amounts of energy to rush through the primary side circuitry. Such an approach needs to be complemented with e.g. a secondary side control arrangement, which monitors the amount of transferred energy and with higher input voltages is quicker to provide limiting actions than the maximum primary current limiting functionality. A drawback is then that the secondary side control arrangement will be inevitably somewhat slow to react, which means that a high primary current peak may pass through before the limiting actions step in. A high current peak through an inductive component emits large amounts of electromagnetic interference, which may be observed even as audible noise.

A prior art solution to said problem is known from the publication US 6,608,769, in which there is a direct coupling from the input voltage to the pulse forming circuit. The principle of this solution is shown in fig. 2 on a very allusive level. On the primary side 101 of a switched-mode power supply there are a primary switch 104, a primary coil 105, a pulse forming circuit 108 and a current sensing resistor 109. As a part of the pulse forming circuit (which obviously must include also other parts, which however are not shown in fig. 2 for the reasons of graphical clarity) there is a so-called cut-off switch 201, the task of which is to terminate each switching pulse by coupling the gate electrode of the primary switch 104 to ground. The moment at which such coupling occurs depends on the potential of a point 202, from which there is a coupling to the gate or base electrode of the cut-off switch 201. The arrow 203 represents the traditional effect of maximum primary current limiting, according to which an increasing voltage drop over the current sensing resistor 109 raises the potential of point 202 until it eventually suffices to turn on the cut-off switch 201. The additional idea presented in US 6,608,769 is to have a coupling 204 from the input voltage to point 202, so that a higher input voltage preparatorily draws higher the potential of point 202 and thus sensitises the maximum primary current limiting functionality.

Even if the solution of US 6,608,769 manages to introduce certain input voltage dependency to the maximum primary current limiting functionality, it may still allow excessively high primary current peaks e.g. during so-called interrupted operation or chopped mode, which may be a built-in property of the switched-mode power supply or may also occur when there is an "intelligent" load such as an electronically controlled battery to be loaded. In the latter case, when the battery is almost full, its internal controlling circuit begins to chop the charging current, which the switched-mode power supply in the charger sees as if a load was regularly coupled and uncoupled at the output. At the moment of coupling the load, all charge that was stored in e.g. snubber capacitances will instantly discharge, which causes a primary current peak. Similar consequences arises if the chopped mode is implemented in control circuitry internal to the switched-mode power supply. Another prior art solution to said problem is known from the publication US 6333 624.

An objective of the present invention is to present a method and a circuit arrangement for implementing maximum primary current limiting in a way that adapts well to wide variations in input voltage and is also effective against current peaks associated with transient phenomena such as instantaneous coupling of a load. An additional objective of the invention is to achieve said result without unnecessarily complicating the circuit topology of the switched-mode power supply.

The objectives of the invention are achieved by arranging alternative detection mechanisms for primary current detecting, and switching them into use depending on the input voltage.

The circuit arrangement according to the invention is characterised by the features recited in the characterising part of the independent claim directed to a circuit arrangement.

The invention is also directed to a power supply, the characteristic features of which are recited in the characterising part of the independent claim directed to a power supply.

Additionally the invention is directed to a method for controlling a switched-mode power supply, the characteristic features of which are recited in the characterising part of the independent claim directed to a method.

The optimal resistance value of the current sensing resistor is proportional to the absolute value of the input voltage: for a large input voltage, a relatively large resistance value should be used, while for lower input voltages also the resistance of the current sensing resistor should be lower. According to the present invention, the effective sensing resistance value that exists on the path of the primary current is altered according to the input voltage. In a simple embodiment there is a basic resistance dimensioned for optimal operation at or close to one extremity of the allowable input voltage range, and a switch that reacts to input voltage approaching the other extremity by coupling another current path into use or out of use, so that the combined resistance of the other current path and the basic resistance becomes optimal towards said other extremity of the allowable input voltage range.

If the transformer of the switched-mode power supply comprises a so-called additional coil, it is advantageous to derive from the voltage waveform of the additional coil an indicator signal indicative of the input voltage value. This indicator signal can then be used to drive at least one switch, which couples additional resistive primary current paths into use according to need.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.
- Fig. 1: illustrates a prior art switched-mode power supply,
- fig. 2: illustrates a known arrangement for introducing input voltage dependency,
- fig. 3: illustrates a principle according to an embodiment of the invention,
- fig. 4: illustrates a principle according to another embodiment of the invention,
- fig. 5: illustrates a principle according to yet another embodiment of the invention,
- fig. 6: illustrates a circuit where a principle according to an embodiment of the invention is applied, and
- fig. 7: illustrates an embodiment of the invention in method form.

Fig. 3 illustrates an embodiment of the invention on a very allusive, abstract level that resembles the approach of graphical representation in fig. 2. On the primary side of a switched-mode power supply there are a primary switch 104, a primary coil 105, a pulse forming circuit 108 and a current sensing resistor 109. Similarly to fig. 2, as a part of the pulse forming circuit (which also here obviously must include also other parts, which however are not shown in fig. 3 for the reasons of graphical clarity) there is the cut-off switch 201. Arrow 203 again represents the effect of maximum primary current limiting, according to which an increasing voltage drop over the current sensing resistor raises the potential of point 202 until it eventually suffices to turn on the cut-off switch 201. However, in parallel with the traditional current sensing resistor 109 there is the series connection of another resistor 301 and a switch 302. A control signal for driving the switch 302 is taken directly or derived indirectly from the input voltage, as is represented schematically by arrow 303.

Since the combined resistance of two parallelly connected resistors is always smaller than the resistance of any of said resistors alone, the coupling principle of fig. 3 indicates that for higher input voltages the switch 302 should remain open so that only resistor 109 is used for maximum primary current limiting. For optimal performance at lower input voltages the resistance of resistor 109 is too high, so as a response to a lower input voltage the switch 302 is closed to take the lower combined resistance of resistors 109 and 301 into use for maximum primary current limiting.

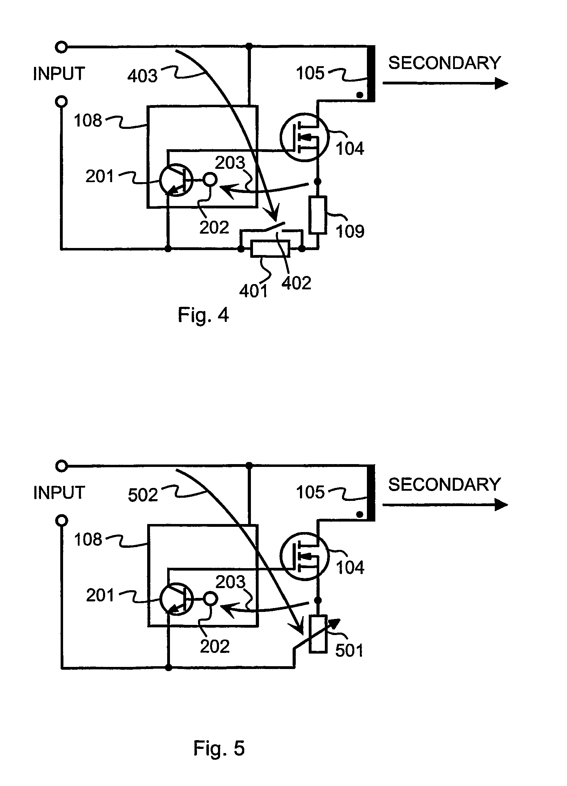

Fig. 4 illustrates an alternative embodiment to that in fig. 3. In the circuit arrangement of fig. 4 the resistance used for primary current sensing is a series connection of the traditional current sensing resistor 109 and another resistor 401, which latter is additionally connected in parallel with a shunting switch 402. A control signal for driving the switch 402 is taken directly or derived indirectly from the input voltage, as is represented schematically by arrow 403.

Since the combined resistance of two serially connected resistors is always larger than the resistance of any of said resistors alone, the coupling principle of fig. 4 indicates that for higher input voltages the switch 402 should remain open so that the combined resistance of resistors 109 and 401 is used for maximum primary current limiting. For optimal performance at lower input voltages said combined resistance is too high, so as a response to a lower input voltage the switch 302 is closed to short-circuit resistor 401, leaving only the resistance of the traditional current sensing resistor 109 into use for maximum primary current limiting.

Fig. 5 illustrates a yet alternative principle in which the current sensing resistor is a voltage controlled resistor 501. A control signal for controlling its resistance is taken directly or derived indirectly from the input voltage, as is represented schematically by arrow 502. The control relationship must be of a directly proportional type, i.e. an increasing input voltage must cause the resistance of the voltage controlled resistor 501 to increase and vice versa.

In selecting between the principles illustrated schematically in figs. 3, 4, and 5 one should note that an inherently large current sensing resistance is usually safest for maximum primary current limiting, because it causes a sharper increase in the voltage drop across the current sensing resistor and is thus likely to trigger limiting action earlier than if the current sensing resistance was small. Additionally it helps to attenuate the current peaks caused by transient effects, which were discussed in the description of prior art. Depending on the implementation of a controllable switch, in the absence of any control signal the switch is either inherently open or inherently closed. Both embodiments of figs. 3 and 4 are such that if the controllable switch is inherently open, the resistance used for current sensing is inherently large.

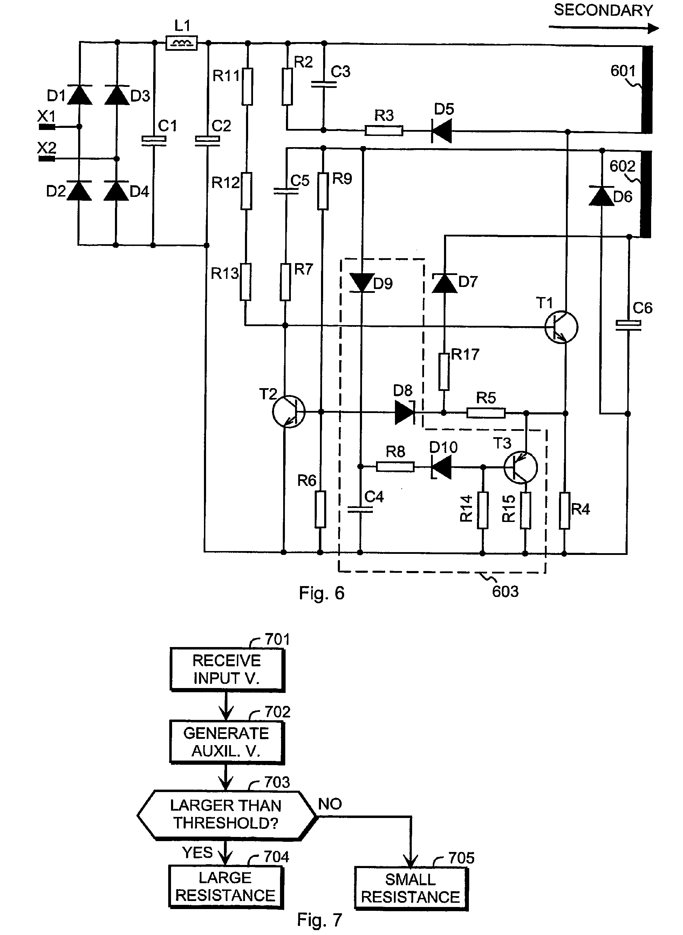

Fig. 6 illustrates an embodiment of the invention on a more practical level. The circuit diagram of fig. 6 describes the primary side of a switched-mode power supply, the transformer of which comprises a primary coil 601, a secondary coil which is not illustrated in fig. 6, and an auxiliary coil 602 coupled to the primary side. The secondary side of the switched-mode power supply would be located to the right of the circuit diagram of fig. 6, but since its implementation is irrelevant to the following description of how the invention is applied, it is not described in any more detail.

Terminals X1 and X2 are adapted to receive an AC input voltage. Diodes D1, D2, D3 and D4, capacitors C1 and C2 as well as the choke L1 constitute a well-known rectifier and input filter coupling. The conventional primary current route is coupled across the output of said rectifier and input filter coupling, and consists of the primary coil 601, the primary switch T1 and the current sensing resistor R4. Resistors R2 and R3 as well as capacitor C3 and diode D5 constitute a well-known ringing attenuator for the primary coil.

Diode D6, capacitor C6 and resistors R6 and R9 constitute a known auxiliary voltage generation circuit. The basic switching action in the circuit of fig. 6 follows the pattern known from prior art: a switching pulse begins when the voltage coming through resistors R11, R12 and R13 reaches the gate or base electrode of the primary switch T1, and ends when the cut-off switch T2 turns on and empties the charge from said gate or base electrode of the primary switch T1 to ground. The voltage that turns on the cut-off switch T2 is essentially the voltage drop across the current sensing resistor R4, with the additional voltage limiter effect that will be caused if the auxiliary voltage grows larger than a threshold defined by the zener diode D7.

Components that would not be present in a conventional primary side of a switched-mode power supply are diodes D8, D9 and D10, resistors R8, R14 and R15, capacitor C4 and transistor T3, which in fig. 6 are specifically emphasized as belonging to part 603 of the circuit. The anode of diode D9 is coupled to the undotted terminal of the auxiliary coil 602, and its cathode is coupled through capacitor C4 to ground. From the point between the cathode of diode D9 and capacitor C4 there is a series coupling of resistor R8 and zener diode D10 to the base of the PNP transistor T3, in which coupling the anode of the zener diode D10 is towards the base of the transistor T3. The emitter of said transistor T3 is coupled to the emitter of the primary switch T1, and the collector of said transistor T3 is coupled through resistor R15 to ground. Resistor R14 is coupled between the base of transistor T3 and ground. Zener diode D8 is placed to the otherwise conventional maximum primary current limitation arrangement so that its anode is coupled to the base of the cut-off switch T2.

Together the components of part 603 of the circuit implement in practice a functional principle essentially similar to that of fig. 3. Diode D9 and capacitor C4 serve to produce a rectified sample of the auxiliary voltage across capacitor C4. If the input voltage to the switched-mode power supply is high, also the absolute value of the voltage across capacitor C4 will be large, exceeding the reverse direction threshold voltage of the zener diode D10, so the switching transistor T3 remains in non-conductive state and there will not be any parallel path for the primary current flowing through resistor R4. With small input voltages to the switched-mode power supply, only a relatively small voltage will accumulate across capacitor C4. The zener diode D10 will block it from reaching the base of transistor T3, which is therefore in conductive state. Now the primary current sees a parallel coupling of resistors R4 and R15 between the emitter of the primary switch T1 and ground. This parallel coupling of resistors R4 and R15 has a resistance that is smaller than the resistance of R4 alone, so the maximum primary current limiting functionality will allow the primary current grow larger before triggering the cut-off switch T2 to end the switching pulse. The role of the zener diode D8 is to define an additional threshold for turning on the cut-off switch T2.

Fig. 7 illustrates the principle of the invention in method form. Based on an input voltage received in the switched-mode power supply according to step 701, an auxiliary voltage is generated at step 702. Here we again assume that the absolute value of the auxiliary voltage is proportional to the input voltage value. Step 703 is a comparison, whether the absolute auxiliary voltage value is larger than a threshold (indicating a large input voltage) or smaller than a threshold (indicating a small input voltage value). A positive finding at step 703 leads to selecting a large resistance according to step 704, whereas a negative finding at step 703 leads to selecting a small resistance according to step 705.

Basically there exist even more alternative ways of implementing in practice the control principle explained above. At least in principle it is possible to construct a linear control arrangement, in which the value of an accumulated auxiliary voltage (cf. the voltage across capacitor C4 in fig. 6) linearly affects the voltage comparison that eventually results in terminating a switching pulse with a cut-off switch. However, compared to the threshold-driven approach illustrated above such linear control arrangements may easily lead to problems with efficiency and reliability.

## Claims

1. A circuit arrangement for limiting a maximum primary current of a switched-mode power supply, comprising:
- a resistive path (109, 301, 302, 401, 402, 501, R4, T3, R15) adapted to carry a primary current and
- a cut-off switch (201, T2) adapted to end a switching pulse in said switched-mode power supply as a response to a voltage drop over said resistive path (109, 301, 302, 401, 402, 501, R4, T3, R15) reaching a threshold value,
**characterised in that** the resistance of said resistive path (109, 301, 302, 401, 402, 501, R4, T3, R15) is electrically controllable according to an input voltage coupled to the circuit arrangement.

2. A circuit arrangement according to claim 1, **characterised in that** said resistive path comprises a first resistor (109, R4), and coupled in parallel with said first resistor (109, R4) a series connection of a second resistor (301, R15) and an electrically controllable switch (302, T3).

3. A circuit arrangement according to claim 1, **characterised in that** said resistive path comprises a first resistor (109), and coupled in series with said first resistor (109) a parallel connection of a second resistor (401) and an electrically controllable switch (402).

4. A circuit arrangement according to claim 1, **characterised in that** said resistive path comprises a voltage-controlled resistor (501).

5. A power supply for converting an input voltage to an output voltage, comprising a circuit arrangement according to claim 1, and further comprising:
- a primary current path comprising a primary coil (105, 601), a primary switch (104, T1) and said resistive path portion (109, 301, 302, 401, 402, 501, R4, T3, R15),
- a pulse forming circuit (108) adapted to deliver switching pulses to said primary switch (104, T1), and
- as a part of the pulse forming circuit said cut-off switch (201, T2) adapted to end a switching pulse as a response to a voltage drop over said resistive path portion (109, 301, 302, 401, 402, 501, R4, T3, R15) reaching a threshold value;
**characterised in that** comprises an electrically controllable resistance (301, 302, 401, 402, 501, T3, R15) as a part of said resistive path portion, which electrically controllable resistance (301, 302, 401, 402, 501, T3, R15) is responsive by its resistance value to a value of an input voltage coupled to the power supply.

6. A power supply according to claim 5, **characterised in that** it comprises:
- an auxiliary voltage generation circuit (602, C6, D6), and
- an electrically controllable switch (302, 402, T3) constituting a part of the resistive path portion (301, 302, 401, 402, 501, T3, R15) and coupled to receive an auxiliary voltage generated by said auxiliary voltage generation circuit (602, C6, D6);
wherein said electrically controllable switch (302, 402, T3) is adapted to turn into non-conductive state as a response to said auxiliary voltage reaching a threshold value and into conductive state as a response to said auxiliary voltage not reaching said threshold value.

7. A power supply according to claim 6, **characterised in that** said resistive path portion comprises a first resistor (109, R4), and coupled in parallel with said first resistor (109, R4) a series connection of a second resistor (301, R15) and said electrically controllable switch (302, T3).

8. A power supply according to claim 6, **characterised in that** said resistive path portion comprises a first resistor (109), and coupled in series with said first resistor (109) a parallel connection of a second resistor (401) and said electrically controllable switch (402).

9. A method for limiting a maximum primary current of a switched-mode power supply, comprising:
- monitoring a voltage drop caused by a primary current flowing through a resistive path portion and
- as a response to said voltage drop reaching a threshold value, cutting off a switching pulse delivered to a primary switch of said switched-mode power supply,
**characterised in that** it comprises:
- monitoring (701) an input voltage coupled to said switched-mode power supply, and
- as a response to a change (703) in said input voltage, changing (704, 705) the resistance of said resistive path portion.

10. A method according to claim 9, **characterised in that** it comprises generating (702) an auxiliary voltage representative of said input voltage and using said auxiliary voltage to drive an electrically controllable switch that constitutes a part of said resistive path portion, the resistance of said resistive path portion depending on the state of conduction of said electrically controllable switch.

## Patentansprüche

1. Schaltungsanordnung zum Begrenzen eines Maximalprimärstroms eines Schaltnetzteils, umfassend:
- einen Widerstandspfad (109, 301, 302, 401, 402, 501, R4, T3, R15), ausgebildet zum Führen eines Primärstroms, und
- einen Trennschalter (201, T2), ausgebildet zum Beenden eines Schaltpulses in dem Schaltnetzteil als eine Antwort darauf, dass ein Spannungsabfall über dem Widerstandspfad (109, 301, 302, 401, 402, 501, R4, T3, R15) einen Schwellwert erreicht,
**dadurch gekennzeichnet, dass** der Widerstand des Widerstandspfades (109, 301, 302, 401, 402, 501, R4, T3, R15) elektrisch steuer-und/oder regelbar ist gemäß einer an die Schaltungsanordnung gekoppelten Eingangsspannung.

2. Schaltungsanordnung nach Anspruch 1, **dadurch gekennzeichnet, dass** der Widerstandspfad einen ersten Widerstand (109, R4) und - parallel gekoppelt mit dem ersten Widerstand (109, R4) - eine Serienschaltung eines zweiten Widerstandes (301, R15) und eines elektrisch steuer- und/oder regelbaren Schalters (302, T3) umfasst.

3. Schaltungsanordnung nach Anspruch 1, **dadurch gekennzeichnet, dass** der Widerstandspfad einen ersten Widerstand (109) und - in Serie gekoppelt mit dem ersten Widerstand (109) - eine Parallelschaltung eines zweiten Widerstandes (401) und eines elektrisch steuer- und/oder regelbaren Schalters (402) umfasst.

4. Schaltungsanordnung nach Anspruch 1, **dadurch gekennzeichnet, dass** der Widerstandspfad einen spannungsgesteuerten und/oder -geregelten Widerstand (501) umfasst.

5. Netzteil zum Umwandeln einer Eingangsspannung in eine Ausgangsspannung, umfassend eine Schaltungsanordnung nach Anspruch 1 und ferner umfassend:
- einen Primärstrompfad, umfassend eine Primärspule (105, 601), einen Primärschalter (104, T1) und den Widerstandspfadbereich (109, 301, 302, 401, 402, 501, R4, T3, R15),
- eine Pulsformungsschaltung (108), ausgebildet zum Liefern von Schaltpulsen an den Primärschalter (104, T1), und
- als Teil der Pulsformungsschaltung den Trennschalter (201, T2), der ausgebildet ist zum Beenden eines Schaltpulses als eine Antwort darauf, dass ein Spannungsabfall über den Widerstandspfadbereich (109, 301, 302, 401, 402, 501, R4, T3, R15) einen Schwellwert erreicht;
**dadurch gekennzeichnet, dass** es einen elektrisch steuer- und/oder regelbaren Widerstand (301, 302, 401, 402, 501, T3, R15) als Teil des Widerstandspfadbereichs umfasst, wobei der elektrisch steuer- und/oder regelbare Widerstand (301, 302, 401, 402, 501, T3, R15) durch seinen Widerstandswert auf einen Wert einer an das Netzteil gekoppelten Eingangsspannung anspricht.

6. Netzteil nach Anspruch 5, **dadurch gekennzeichnet, dass** es umfasst:
- eine Hilfsspannungserzeugungsschaltung (602, C6, D6) und
- einen elektrisch steuer- und/oder regelbaren Schalter (302, 402, T3), der Teil des Widerstandspfadbereichs (301, 302, 401, 402, 501, T3, R15) bildet und zum Empfangen einer durch die Hilfsspannungserzeugungsschaltung (602, C6, D6) erzeugten Hilfsspannung gekoppelt ist;
wobei der elektrisch steuer- und/oder regelbare Schalter (302, 402, T3) ausgebildet ist, in einen nicht-leitfähigen Zustand zu gehen als eine Antwort darauf, dass die Hilfsspannung einen Schwellwert erreicht, und in einen leitfähigen Zustand zu gehen als eine Antwort darauf, dass die Hilfsspannung den Schwellwert nicht erreicht.

7. Netzteil nach Anspruch 6, **dadurch gekennzeichnet, dass** der Widerstandspfadbereich einen ersten Widerstand (109, R4) und - parallel gekoppelt mit dem ersten Widerstand (109, R4) - eine Serienschaltung eines zweiten Widerstandes (301, R15) und des elektrisch steuer-und/oder regelbaren Schalters (302, T3) umfasst.

8. Netzteil nach Anspruch 6, **dadurch gekennzeichnet, dass** der Widerstandspfadbereich einen ersten Widerstand (109) und - in Serie gekoppelt mit dem ersten Widerstand (109) - eine Parallelschaltung eines zweiten Widerstandes (401) und des elektrisch steuer- und/oder regelbaren Schalters (402) umfasst.

9. Verfahren zum Begrenzen eines Maximalprimärstroms eines Schaltnetzteils, umfassend:
- Überwachen eines Spannungsabfalls, verursacht durch einen Primärstrom, der durch einen Widerstandspfadbereich fließt, und,
- als eine Antwort darauf, dass der Spannungsabfall einen Schwellwert erreicht, Trennen eines an einen Primärschalter des Schaltnetzteils gelieferten Schaltpulses,
**dadurch gekennzeichnet, dass** es umfasst:
- Überwachen (701) einer an das Schaltnetzteil gekoppelten Eingangsspannung und,
- als eine Antwort auf eine Veränderung (703) in der Eingangsspannung, Ändern (704, 705) des Widerstandes des Widerstandspfadbereichs.

10. Verfahren nach Anspruch 9, **dadurch gekennzeichnet, dass** es umfasst: Erzeugen (702) einer für die Eingangsspannung repräsentativen Hilfsspannung und Verwenden der Hilfsspannung zum Ansteuern eines elektrisch steuer- und/oder regelbaren Schalters, der einen Teil des Widerstandspfadbereichs bildet, wobei der Widerstand des Widerstandspfadbereichs vom Leitzustand des elektrisch steuer- und/oder regelbaren Schalters abhängt.

## Revendications

1. Dispositif de circuit pour limiter un courant primaire maximum d'une alimentation à mode commuté, comprenant :
- un trajet résistif (109, 301, 302, 401, 402, 501, R4, T3, R15) adapté pour transporter un courant primaire, et
- un commutateur de coupure (201, T2) adapté pour mettre fin à une impulsion de commutation dans ladite alimentation à mode commuté en réponse au fait qu'une chute de tension sur ledit trajet résistif (109, 301, 302, 401, 402, 501, R4, T3, R15) atteint une valeur de seuil,
**caractérisé en ce que** la résistance dudit trajet résistif (109, 301, 302, 401, 402, 501, R4, T3, R15) peut être commandée électriquement en fonction d'une tension d'entrée couplée au dispositif de circuit.

2. Dispositif de circuit selon la revendication 1, **caractérisé en ce que** ledit trajet résistif comprend une première résistance (109, R4) et, couplée en parallèle avec ladite première résistance (109, R4), une connexion série d'une deuxième résistance (301, R15) et d'un commutateur pouvant être commandé électriquement (302, T3).

3. Dispositif de circuit selon la revendication 1, **caractérisé en ce que** ledit trajet résistif comprend une première résistance (109) et, couplée en série avec ladite première résistance (109), une connexion parallèle d'une deuxième résistance (401) et d'un commutateur pouvant être commandé électriquement (402).

4. Dispositif de circuit selon la revendication 1, **caractérisé en ce que** ledit trajet résistif comprend une résistance commandée par tension (501).

5. Alimentation pour convertir une tension d'entrée en une tension de sortie, comprenant un dispositif de circuit selon la revendication 1, et comprenant en outre :
- un trajet de courant primaire comprenant une bobine primaire (105, 601), un commutateur primaire (104, T1) et ladite partie de trajet résistif (109, 301, 302, 401, 402, 501, R4, T3, R15),
- un circuit de formation d'impulsion (108) adapté pour délivrer des impulsions de commutation audit commutateur primaire (104, T1), et
- en tant que partie du circuit de formation d'impulsion, ledit commutateur de coupure (201, T2) adapté pour mettre fin à une impulsion de commutation en réponse au fait qu'une chute de tension sur ladite partie de trajet résistif (109, 301, 302, 401, 402, 501, R4, T3, R15) atteint une valeur de seuil,
**caractérisée en ce qu'**elle comprend une résistance pouvant être commandée électriquement (301, 302, 401, 402, 501, T3, R15) en tant que partie de ladite partie de trajet résistif, laquelle résistance pouvant être commandée électriquement (301, 302, 401, 402, 501, T3, R15) réagit par sa valeur de résistance à une valeur d'une tension d'entrée couplée à l'alimentation.

6. Alimentation selon la revendication 5, **caractérisée en ce qu'**elle comprend :
- un circuit de génération de tension auxiliaire (602, C6, D6), et
- un commutateur pouvant être commandé électriquement (302, 402, T3) constituant une partie de la partie de trajet résistif (301, 302, 401, 402, 501, T3, R15) et couplé pour recevoir une tension auxiliaire générée par ledit circuit de génération de tension auxiliaire (602, C6, D6) ;
dans laquelle ledit commutateur pouvant être commandé électriquement (302, 402, T3) est adapté pour passer dans l'état non conducteur en réponse au fait que ladite tension auxiliaire atteint une valeur de seuil et dans l'état conducteur en réponse au fait que ladite tension auxiliaire n'atteint pas ladite valeur de seuil.

7. Alimentation selon la revendication 6, **caractérisée en ce que** ladite partie de trajet résistif comprend une première résistance (109, R4) et, couplée en parallèle avec ladite première résistance (109, R4), une connexion série d'une deuxième résistance (301, R15) et dudit commutateur pouvant être commandé électriquement (302, T3).

8. Alimentation selon la revendication 6, **caractérisée en ce que** ladite partie de trajet résistif comprend une première résistance (109) et, couplée en série avec ladite première résistance (109), une connexion parallèle d'une deuxième résistance (401) et dudit commutateur pouvant être commandé électriquement (402).

9. Procédé pour limiter un courant primaire maximum d'une alimentation à mode commuté, comprenant les étapes consistant à :
- surveiller une chute de tension provoquée par un courant primaire circulant à travers une partie de trajet résistif, et
- en réponse au fait que ladite chute de tension atteint une valeur de seuil, arrêter une impulsion de commutation délivrée à un commutateur primaire de ladite alimentation à mode commuté, **caractérisé en ce qu'**il comprend en outre les étapes consistant à :
- surveiller (701) une tension d'entrée couplée à ladite alimentation à mode commuté, et
- en réponse à une variation (703) de ladite tension d'entrée, modifier (704, 705) la résistance de ladite partie de trajet résistif.

10. Procédé selon la revendication 9, **caractérisé en ce qu'**il comprend la génération (702) d'une tension auxiliaire représentative de ladite tension d'entrée et l'utilisation de ladite tension auxiliaire pour commander un commutateur pouvant être commandé électriquement qui constitue une partie de ladite partie de trajet résistif, la résistance de ladite partie de trajet résistif étant fonction de l'état de conduction dudit commutateur pouvant être commandé électriquement.
